# EUROPÄISCHE PATENTSCHRIFT

(11) **EP 2 395 256 B1**
(45) Veröffentlichungstag und Bekanntmachung des Hinweises auf die Patenterteilung: **25.08.2021**
(21) Anmeldenummer: 11003314.9
(22) Anmeldetag: 20.04.2011
(51) Int. Cl.: F16D 63/00, F16D 65/14, B60T 11/28

(54) **Vorrichtung mit einem Zuschaltventil**
Device with a connecting valve
Dispositif doté d'une soupape de mise en circuit

(30) Priorität: 22.04.2010 DE 102010018181
(43) Veröffentlichungstag der Anmeldung: 14.12.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 1 655 298
- DE-A1- 3 016 783
- US-A1- 2005 183 907

## Beschreibung

Die Erfindung betrifft eine Vorrichtung mit einem ersten und einem zweiten jeweils huberzeugenden, pneumatischen oder hydraulischen Verdrängersystem, wobei jedes Verdrängersystem auf ein Schiebekeilgetriebe wirkt.

Vorrichtungen wie beispielsweise Brems- und/oder Klemmvorrichtungen mit jeweils mehr als einem pneumatischen oder hydraulischen Antrieb werden in der Regel immer so angesteuert, dass alle Antriebe einer Vorrichtung einen verbleichbaren Aufbau haben und zudem zumindest annähernd zeitgleich betätigt werden. Dies zeigen z. B. Vorrichtungen, wie sie u.a. aus der DE 102 07 605 und der US 2005/0183907 A1 bekannt sind.

Aus der DE 30 16 783 A1 ist eine Schwimmsattel-Teilbelagsscheibenbremse bekannt, bei der im Schwimmsattel beidseits der Scheibenbremse unterschiedlich große hydraulische Zylinder angeordnet sind. Der kleinere Zylinder weist einen Kolben auf, der über selbsthemmend angeordnete Spreizkeile einen ersten Bremsbelag gegen die Bremsscheibe presst. Der Kolben des größeren Zylinders wirkt, über ein Schwellenventil beaufschlagt, direkt auf einen zweiten, an der Bremsscheibe anlegbaren Bremsbelag.

Die DE 16 55 298 A1 beschreibt eine hydraulisch betätigbare Scheibenbremse mit zwei, bezüglich des Durchmessers, unterschiedlich großen Hydraulikzylindern. Der kleinere Hydraulikzylinder wird über ein federbelastetes Rückschlagventil angesteuert.

Der vorliegenden Erfindung liegt die Problemstellung zugrunde, eine Vorrichtung mit mindestens zwei pneumatischen oder hydraulischen, huberzeugenden Antrieben zu entwickeln, die bei unterschiedlich langen Hüben einen einfachen und bauraumsparenden Aufbau hat und zudem dauerhaft wartungsarm ist.

Diese Problemstellung wird mit den Merkmalen des Hauptanspruchs gelöst. Dazu wirkt das erste Verdrängersystem auf ein Schiebekeilgetriebe, dessen Keilwinkel mindestens doppelt so groß ist wie der Keilwinkel des Schiebekeilgetriebes, auf das das zweite Verdrängersystem wirkt. Das Verdrängersystem des zweiten Antriebs ist unter Zwischenschalten eines Zuschaltventils dem Verdrängersystem des ersten Antriebs nachgeschaltet. Im Zuschaltventil mündet die Versorgungsleitung des ersten Verdrängersystems in einen Hauptventilraum, in den auch die Versorgungsleitung des zweiten Verdrängersystems mündet. Bei stets offener erster Versorgungsleitung ist die zweite Versorgungsleitung unterhalb eines vorgegebenen Druckschwellwerts - durch ein im Hauptventilraum angeordnetes Hauptventilglied - geschlossen. Im Hauptventilglied befindet sich ein Rückschlagventilraum, in dem ein Rückschlagventilglied angeordnet ist, das bei einer entlasteten ersten Versorgungsleitung die zweite Versorgungsleitung mit der ersten durch Öffenbarkeit verbindet.

Das Zuschaltventil gibt das Druckmedium zu einem zweiten Verbraucher frei, sobald der Druck am ersten Verbraucher einen vorgegebenen Druckschwellwert erreicht hat. Dieser Druckschwellwert entsteht z. B. dadurch, dass Teile des Verbrauchers gegen einen Anschlag fahren oder aus einem anderen Grund ihre Hubbewegung beenden. Für eine solche druckabhängige Folgesteuerung umfasst das Zuschaltventil ein modifiziertes Druckminderventil, dessen Steuereingang und dessen regulärer Ausgang jeweils an einer Arbeitsleitung angeschlossen ist.

Jeder Verbraucher ist ein Verdrängersystem. Letzteres ist ein Sammelbegriff für alle Verbraucher oder Antriebsvorrichtungen, die mit Hilfe eines Druckmediums eine Hubbewegung erzeugen. Die Hubbewegung kann hierbei eine Zug- oder Schubbewegung sein. Verdrängersysteme sind z. B. einfach- oder doppelt wirkende Zylinder-Kolben-Einheiten, Membranzylinder, Rollzylinder oder Balgzylinder. Die Zylinder dieser Verdrängersysteme sind dabei nicht auf kreisrunde Querschnitte beschränkt.

Weitere Einzelheiten der Erfindung ergeben sich aus den Unteransprüchen und der nachfolgenden Beschreibung mindestens einer schematisch dargestellten Ausführungsform.
- Figur 1:: Längsschnitt durch das unbetätigte Zuschaltventil;
- Figur 2:: Pneumatikschaltplan der Vorrichtung;
- Figur 3:: Längsschnitt durch das betätigte Zuschaltventil;
- Figur 4:: Längsschnitt durch das entlüftende Zuschaltventil;
- Figur 5:: perspektivische Ansicht der Vorrichtung;
- Figur 6:: horizontaler Längsschnitt der unbetätigten Vorrichtung;
- Figur 7:: wie Figur 6, jedoch betätigt;
- Figur 8:: vertikaler Längsschnitt durch den Zustellantrieb;
- Figur 9:: vertikaler Längsschnitt durch den Klemmantrieb;
- Figur 10:: vertikaler Querschnitt der Vorrichtung;
- Figur 11:: horizontaler Längsschnitt der unbetätigten Vorrichtung mit Blick nach oben.

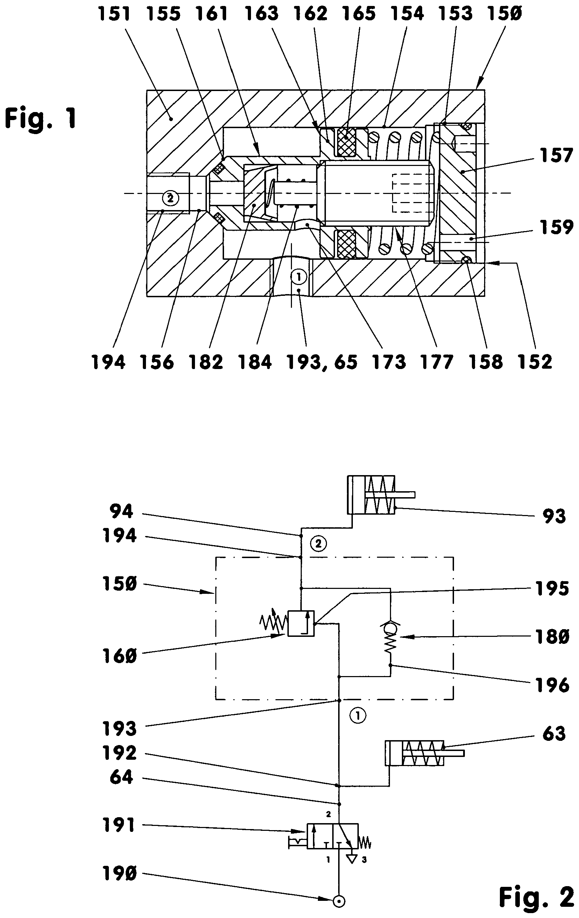

Die Figuren 1, 3 und 4 zeigen ein komplettes Zuschaltventil(150). Das Zuschaltventil (150) umfasst neben seinem z. B. eigenständigen Gehäuse (151) fünf größere Teile, ein Hauptventilglied (161), eine Hauptventilfeder (179), ein Rückschlagventilglied (182), eine Rückschlagventilfeder (184) und einen Ventildeckel (157).

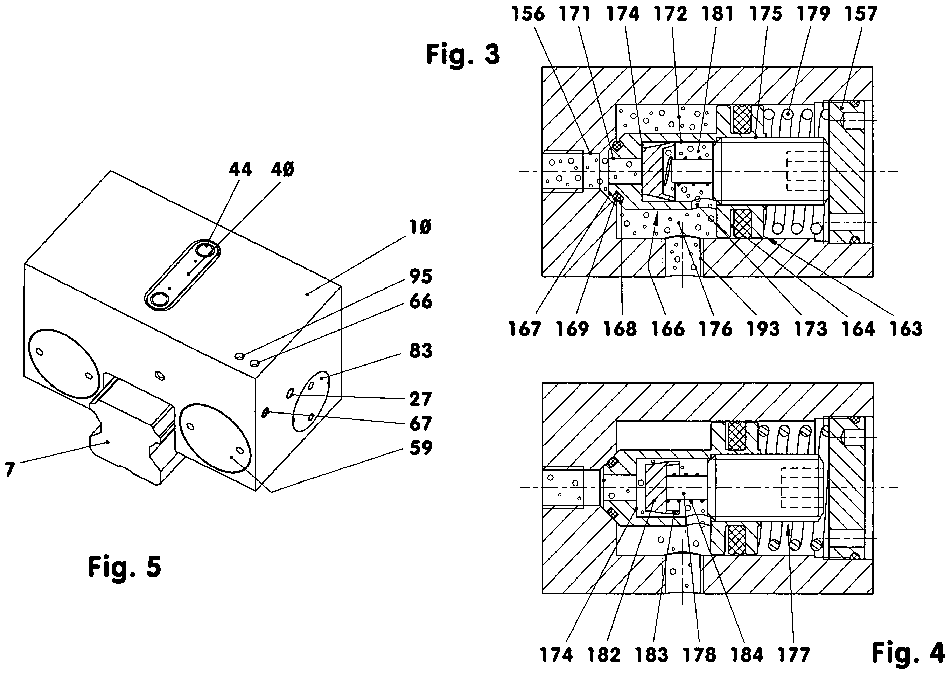

Die Figur 2 stellt einen Schaltplan dar, in dem das Zuschaltventil (150) zwei einfach wirkende Zylinder (63, 93) einer in Figur 5 gezeigten Klemmvorrichtung steuert. Beide Zylinder (63, 93) werden von einer Druckquelle (190) z. B. mit Druckluft versorgt. Vor dem ersten Zylinder (63) befindet sich ein hand- oder fühlerbetätigtes 3/2-Wegeventil (191) mit Rückhubfeder. Der Druckluftausgang des 3/2-Wegeventils (191) ist über eine erste Versorgungsleitung (64) am ersten Zylinder (63) und am Eingangsanschluss (193) des Zuschaltventils (150) angeschlossen. Ggf. ist zwischen der ersten Verzweigungsstelle (192) der Versorgungsleitung (64) und dem 3/2-Wegeventil (191) eine Drosselstelle eingebaut.

Zwischen einem Ausgangsanschluss (194) des Zuschaltventils (150) und dem zweiten Zylinder (93) ist eine zweite Versorgungsleitung (94) angeordnet.

Das Zuschaltventil (150) selbst besteht nach der Symboldarstellung aus Figur 2 aus einem modifizierten Druckminderventil (160) und einem Rückschlagventil (180). Am sogenannten Steueranschluss (195) des Druckminderventils (160) liegt die erste Versorgungsleitung (64) als Arbeitsleitung an. Vor und hinter dem Druckminderventil (160) ist eine das Ventil (160) umgehende Bypassleitung (196) angeordnet, in der ein Rückschlagventil (180) integriert ist. Das Rückschlagventil (180) öffnet die Bypassleitung (196) für Druckluft, die vom zweiten Zylinder (93) aus in Richtung 3/2-Wegeventil (191) strömt.

Nach Figur 1 hat das Zuschaltventil (150) z. B. ein eigenes quaderförmiges Gehäuse (151) mit einer zentralen, durchgehenden Stufenbohrung (152). Die Stufenbohrung (152) hat einen Deckelbereich (153), einen Ventilgliedbereich (154), einen Sitzbereich (155) und einen Anschlussbereich (156).

Der Ventilgliedbereich (154) stellt eine glatte zylindrische Bohrung dar, in der das Hauptventilglied (161) gelagert und geführt ist. Er hat z. B. einen Durchmesser von 16 mm. Nach vorn hin - nach Figur 1 also nach links hin - geht er über den z. B. kegelstumpfmantelförmigen Sitzbereich (155) in den Anschlussbereich (156) über.

Der Sitzbereich (155) hat einen Kegelwinkel von z. B. 90 Winkelgraden. Im hinteren, also linken Endbereich der Stufenbohrung (152) schließt sich an den Ventilgliedbereich (154) ein den Ventildeckel (157) einschraubtiefeneinstellbar lagernder Deckelbereich (153) mit Feingewinde an.

Im mittleren Bereich weist der Ventilgliedbereich (154) für den Zulauf eine Querbohrung (65) auf, die als Eingangsanschluss (193) dient. Die Querbohrung (65) verfügt ebenfalls über ein M5-Innengewinde.

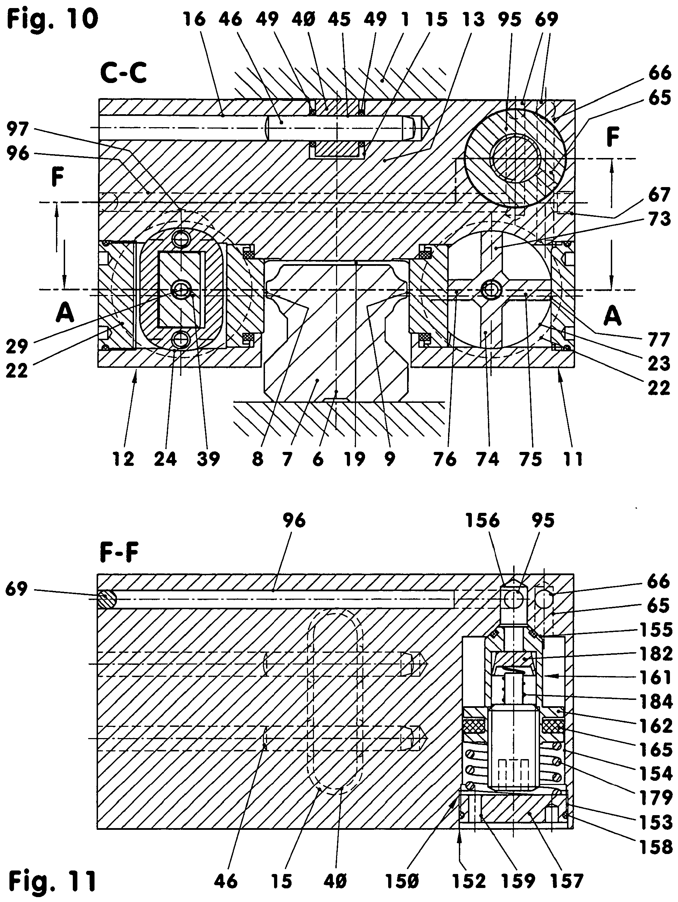

Das in der Ventilgliedbohrung (154) sitzende Hauptventilglied (161) besteht im Wesentlichen aus einem Ventilkolben (162) und einer besonderen Stiftschraube (177). Der Ventilkolben (162) hat einen Kolbenbereich (163) und einen angeformten Schaftbereich (166). Der Kolbenbereich (163) hat eine umlaufende Ringnut (164), in der ein Dichtring (165) eingesetzt ist. Der zylindrische Schaftbereich (166), dessen Durchmesser z. B. 9 mm beträgt, ist z. B. 11 mm lang, wobei das hintere Ende eine 2*45°-Fase (167) aufweist. Nach Figur 3 weist die Fase (167) in dem Bereich, in dem sie nach Figur 1 oder 11 am Sitzbereich (155) der Stufenbohrung (152) anliegt, eine Ringnut (168) auf, in der ein Dichtring (169) sitzt.

Der zwischen dem Kolbenbereich (163) und dem Schaftbereich (166) umschlossene Raum ist der Hauptventilraum (176). In ihn mündet die Quer- bzw. Zulaufbohrung (65) unabhängig von der Stellung des Hauptventilgliedes (161).

Der Ventilkolben (162) weist eine zentrale Bohrung auf, die aus einem Rückströmabschnitt (171), einem Sitzabschnitt (172) und einem Gewindeabschnitt (175) besteht. Der Rückströmabschnitt (171), der z. B. einen Durchmesser von 3 mm aufweist, befindet sich im Bereich der Fase (167). Der Sitzabschnitt (172), der einen planen Boden (174) aufweist und einen Durchmesser von z. B. 7 mm hat, ist im Schaftbereich (166) des Ventilkolbens (162) angeordnet. Der Gewindeabschnitt (175) befindet sich im Kolbenbereich (163).

Im Gewindeabschnitt (175) ist die Stiftschraube (177) gasdicht und ggf. verstellbar eingeschraubt. Soll Letztere verstellbar sein, ist sie im Gewindeabschnitt (175) mittels Lack gesichert. Ansonsten ist sie im Gewindeauslauf des Gewindeabschnitts (175) verklemmt. Die Stiftschraube (177) weist an ihrem vorderen Ende einen Zylinderstift (178) auf, während sie an ihrer hinteren Stirnseite z. B. eine Innensechskantausnehmung hat. Der Zylinderstift (178) hat einen Durchmesser von 5,6 mm.

Zwischen dem Zylinderstift (178) und dem planen Boden (174) des Sitzabschnitts (172) ist ein Rückschlagventilglied (182) angeordnet. Der Boden (174) und die diesem zugewandte Stirnfläche des Zylinderstifts (178) dienen als Anschläge für das Rückschlagventilglied (182). Dieses Ventilglied (182) ist z. B. ein im Wesentlichen kegelstumpfartiger Elastomerkörper mit einer planen Sitzfläche und einer schürzenartigen, umlaufenden Dichtlippe (183). Die plane Sitzfläche wird bei geschlossenem Rückschlagventil (180) mittels einer auf dem Zylinderstift (178) geführten Rückschlagventilfeder (184) zum Verschließen des Rückströmabschnitts (171) gegen den Boden (174) gepresst. Selbstverständlich kommt das Rückschlagventil (180) auch ohne die Rückschlagventilfeder (184) aus. Auch kann das Rückschlagventilglied (182) die Form einer Kugel haben.

Der Raum, in dem sich das Rückschlagventilglied (182) bewegen kann, ist der Rückschlagventilraum (181), vgl. Figur 3. Er kommuniziert mit dem Hauptventilraum (176) - unabhängig von der Stellung des Rückschlagventilglieds (182) - mittels einer im Sitzabschnitt (172) angeordneten, z. B. radialen Querbohrung (173).

Zwischen dem Ventildeckel (157) und dem Kolbenbereich (163) des Ventilkolbens (162) ist in dem Ventilgliedbereich (154) die Rückhubfeder (179) angeordnet. Der eingeschraubte Ventildeckel (157) weist an seiner Umfangsfläche eine Ringnut auf, in der zur Positionssicherung des Ventildeckels (157) ein Kunststoffquetschring (158) sitzt. Zum Verschrauben des Ventildeckels (157) besitzt dieser z. B. zwei stirnseitige Bohrungen zum Ansetzen eines Werkzeugs. Mindestens eine der Bohrungen ist eine Durchgangsbohrung (159).

Um nach Figur 2 den Kolben des ersten Zylinders (63) ausfahren zu lassen, wird das 3/2-Wegeventil (191) betätigt. Die Druckluft steht somit am ersten Zylinder (63) und am modifizierten Druckminderventil (160) an. Nach Figur 3 liegt am Eingangsanschluss (193) Druckluft an. Solange der erste Zylinder (63) befüllt wird, bleibt der Druck der Druckluft unterhalb eines Druckschwellwertes, der z. B. bei 4,5 * 10⁵ Pa liegt.

Zur Einstellung des Druckschwellwerts wird z.B. die Einschraubtiefe des Ventildeckels (157) im Deckelbereich (153) der Stufenbohrung (152) variiert.

Ist der erste Zylinder (63) zum Stillstand gekommen, übersteigt der Druck der Druckluft im Hauptventilraum (176) den Schwellwert. Das Hauptventilglied (161) wird - unter Öffnen - nach rechts verschoben. Nach Figur 2 strömt die Druckluft über den Ausgangsanschluss (194) in die zweite Versorgungsleitung (94) ein und gelangt somit in den zweiten Zylinder (93). In Letzterem fährt der Kolben aus.

Zum Entlasten der Zylinder (63, 93) wird das 3/2-Wegeventil (191) wieder in die, in Figur 2 dargestellte, Position gebracht. Der Luftdruck im Hauptventilraum (176) fällt unter den Schwellwert. Das Hauptventilglied (161) verschließt den Anschlussbereich (156), indem das Hauptventilglied (161) auf dem kegelstumpfförmigen Sitzbereich (155) dichtend aufsitzt, vgl. Figur 4. Da der Luftdruck im Hauptventilraum (176) und somit auch im Rückschlagventilraum (181) weiterhin fällt, öffnet das Rückschlagventil (180). Das Rückschlagventilglied (182) hebt gegen die Kraftwirkung der Rückschlagventilfeder (184) vom Boden (174) ab. Zugleich verliert die Dichtlippe (183) des Rückschlagventilglieds (182) zumindest großteils den Kontakt zur Wandung des Sitzabschnitts (172). Der noch im zweiten Zylinder (93) vorhandene Überdruck strömt über das Rückschlagventil (180) und die erste Verbindungsleitung (64) zum 3/2-Wegeventil (191), um dort ins Freie entlüftet zu werden, vgl. Figur 2.

Sobald die auf das Rückschlagventilglied (182) wirkende Öffnungskraft des Gasdrucks der zweiten Verbindungsleitung (94) kleiner ist als die Schließkraft der Rückschlagventilfeder (184), schließt sich das Rückschlagventil (180) wieder, vgl. Figur 1. Bei einem Rückschlagventil (180) ohne Rückschlagventilfeder (184) fällt der Druck im Zylinder (93) auf den Umgebungsdruck ab.

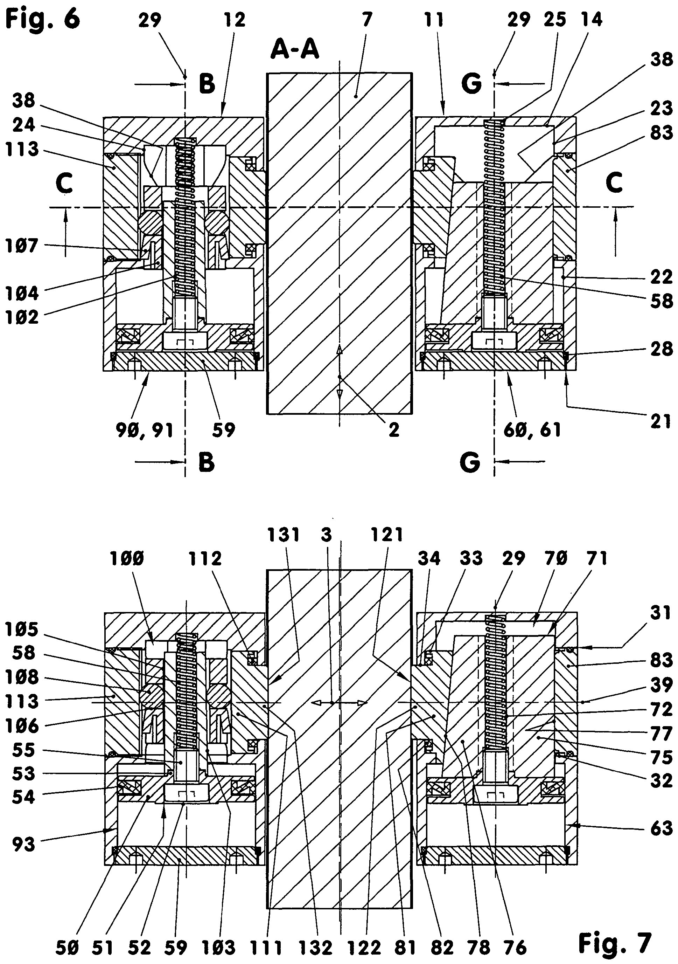

Die Figur 5 zeigt eine Vorrichtung, in der die beiden Zylinder (63, 93) beispielsweise eingebaut sind. Die Vorrichtung ist eine Klemmung, deren Reibgehemme (121, 131), vgl. Figur 6, mittels zweier Antriebe (60, 90) betätigt werden. Die Vorrichtung umgreift mit ihrem c-förmigen Grundkörper (10) eine Führungsschiene (7). Im Grundkörper (10) befinden sich zwischen je einer einfach wirkenden Zylinder-Kolben-Einheit (50, 63; 50, 93) und einem Reibgehemme (121, 131) ein spezielles Schiebekeilgetriebe (70, 100).

Die Vorrichtung ist über den Grundkörper (10) an einem Schlitten (1) befestigt, der an der Führungsschiene (7) abgebremst oder geklemmt werden soll. Die Führungsschiene (7) verläuft parallel zur Schlittenbewegungsrichtung bzw. zur Führungslängsrichtung (2).

In der Figur 10 ist ein Abschnitt einer doppelprismatischen Führungsschiene (7) dargestellt. Die Führungsschiene (7) besteht aus einem Stab mit einem annähernd quaderförmigen Hüllquerschnitt, in den beidseitig je eine im Wesentlichen v-förmige Nut mit verbreitertem Nutgrund eingearbeitet ist. Die Führungsschiene (7) kontaktiert über ihre Bodenfläche z. B. das sie tragende Maschinenbett (5).

Die Führungsschiene (7) hat oberhalb der v-förmigen Nut u.a. zwei Nebenflächen (8, 9), die sich bezogen auf die vertikale Mittenlängsebene (6) spiegelbildlich gegenüber liegen. Beide Nebenflächen (8, 9) sind zueinander parallel ausgerichtet. Sie dienen den Reibbacken (122, 132), vgl. Figur 7, als Anlageflächen.

Der z. B. einteilige, aus 16 MnCr 5 gefertigte Grundkörper (10) ist im Wesentlichen ein quaderförmiges Bauteil, das an seiner Unterseite eine zentrale Nut (19) mit einem z. B. rechteckigen Querschnitt aufweist. In die Nut (19) taucht die Führungsschiene (7) nach Figur 10 zu ca. drei Vierteln ein. Der Grundkörper (10) hat beispielsweise folgende Abmessungen: 75 mm x 41 mm x 43 mm.

Das Gehäuse (10) hat eine rechte (11) und eine linke Gehäusezone (12). Beide Zonen (11, 12) befinden sich unterhalb einer Flanschzone (13).

In der Flanschzone (13) ist u.a. ein Vorrichtungsträger (40) gelagert. Der Vorrichtungsträger (40) hat nach den Figuren 5 und 10 eine passfederartige Geometrie. Seine obere Adapterfläche weist zwei Gewindebohrungen (44) zur Befestigung an dem die Vorrichtung lagernden Schlitten (1) auf. Quer zu den Gewindebohrungen (44) hat er z. B. zwei Gleitbohrungen (45), die parallel zur Klemmrichtung (3) und zudem quer zur Führungslängsrichtung (2) orientiert sind.

In der Oberseite des Gehäuses (10) ist zur Lagerung des Vorrichtungsträgers (40) ein in Führungslängsrichtung (2) orientiertes Langloch (15) eingearbeitet, das von zwei Querbohrungen (16) geschnitten wird. Die in Klemmrichtung (3) gemessene Breite des Langloches (15) ist wie die in Führungslängsrichtung (2) gemessene Länge des Langloches (15) jeweils um z. B. 2 mm breiter bzw. länger als die entsprechende Ausdehnung des Vorrichtungsträgers (40), vgl. auch Figur 11.

Der Vorrichtungsträger (40) sitzt mit geringem Spiel über seine Gleitbohrungen (45) auf den in den Querbohrungen (16) eingeklemmt sitzenden Gleitstiften (46). Um das Gehäuse (10) in Klemmrichtung (3) elastisch schwimmend am Vorrichtungsträger (40) zu zentrieren, sitzen beidseits des Vorrichtungsträgers (40) Elastomerkörper (49), die zudem auf den Gleitstiften (46) gelagert sind. Die Elastomerkörper (49) können die Form eines Torus, die Form einer gelochten Kreisscheibe oder die Form einer rechteckigen oder anderen vieleckigen ein- oder mehrfach gelochten Platte haben. Nach der Montage ragt die Adapterfläche des Vorrichtungsträgers (40) z. B. 0,1 bis 0,5 mm über die Oberseite des Gehäuses (10) über.

Jede Gehäusezone (11, 12) weist zur Aufnahme der Antriebe (60, 90) eine mehrstufige Sacklochbohrung (21) auf, deren jeweilige Mittellinie (29) parallel zur Führungslängsrichtung (2) orientiert ist, vgl. Figur 6. Die Sacklochbohrung (21) setzt sich aus einer Zylinderflächenbohrung (22) und einer Keilgetriebeausnehmung (23, 24) zusammen. Im Bereich der Öffnung der Zylinderflächenbohrung (22), deren Durchmesser z. B. 22 mm misst, befindet sich ein Feingewinde und eine einen Dichtring (28) aufnehmende Nut.

An die Zylinderflächenbohrung (22) schließt sich über einen planen Gehäusebund die Keilgetriebeausnehmung (23, 24) an. Der Gehäusebund kann als Anschlag für einen Pneumatikkolben (50) dienen. Die Keilgetriebeausnehmung (23, 24) hat einen kleineren Querschnitt als die Zylinderflächenbohrung (22). Die rechte Keilgetriebeausnehmung (23) ist eine Zylinderbohrung, während die linke Keilgetriebeausnehmung (24) z. B. einen ovalen Querschnitt hat.

Die einzelne Keilgetriebeausnehmung (23, 24) erstreckt sich bis zur hinteren Wandung des Gehäuses (10), um dort in einer planen Bodenfläche (14) zu enden. In der Bodenfläche (14) jeder Keilgetriebeausnehmung (23, 24) befindet sich zentral eine Zylindersenkung (25) zur Positionierung einer Rückhubfeder (58). Die linke Keilgetriebeausnehmung (24) hat zwei weitere Zylindersenkungen (26), vgl. Figur 6, zur Positionierung von zwei Käfigrückhubfedern (109).

Quer zur Keilgetriebeausnehmung (23, 24) ist jeweils eine Gehemmebohrung (31) und ggf. eine Entlüftungsbohrung (27) angeordnet, vgl. Figur 7. Die Mittellinie (39) der jeweiligen Gehemmebohrung (31) kreuzt die Mittellinien (29) der Sacklochbohrungen (21) im Abstand von z. B. 1 mm, vgl. Figur 10, wobei die Mittellinien (39) der Gehemmebohrungen (31) unterhalb der Mittellinien (29) der Sacklochbohrungen (21) liegen.

Jede Gehemmebohrung (31) hat drei abgestufte Bereiche, vgl. Figur 10. Von der Gehäuseaußenseite her sind das eine Hauptbohrung (32), eine Druckstückführungsbohrung (33) und eine Austrittsbohrung (34). Die Hauptbohrung (32) schneidet sich mit der Keilgetriebeausnehmung (23, 24). In den Gehäusezonen (11, 12) kann man die Durchdringungslinien (38) erkennen.

In dem Gehäuse (10) ist nach den Figuren 6 bis 11 in jeder Gehäusezone (11, 12) jeweils ein Antrieb (60, 90) eingebaut, der hier aus einer einfach wirkenden, druckluftbetriebenen Zylinder-Kolben-Einheit (50, 63; 50, 93) - also einem Verdrängersystem (61, 91) - und einem Schiebekeilgetriebe (70, 100) besteht.

Die Zylinder-Kolben-Einheit (50, 63; 50, 93), die beispielsweise für beide Gehäusezonen (11, 12) baugleich ist, hat z. B. einen scheibenartigen Pneumatikkolben (50) mit einer zentralen Bohrung (51), vgl. Figur 7. Die Bohrung (51) weist eine Zylindersenkung auf. Die zylindrische Außenfläche des Kolbens (50) weist eine Ringnut auf, in der ein Dichtring (54) eingesetzt ist. Die druckbeaufschlagbare Stirnfläche des Kolbens (50) trägt einen Anschlagsteg (52), der die Zylindersenkung der Bohrung (51) umgibt. Mit Hilfe des Anschlagsteges (52) kann sich das einströmende Druckmittel schnell vor der aktiven Kolbenfläche verteilen.

Auf der dem jeweiligen Schiebekeilgetriebe (70, 100) zugewandten Seite ist am Kolben (50) ein kurzer Zentrierzapfen (53) angeformt.

Anstelle des kreisrunden Querschnitts der Kolben (50) und Zylinderflächenbohrungen (22) kann der Querschnitt der Kolben (50) und der Zylinderflächenbohrungen (22) auch oval, elliptisch, polygonal oder vieleckig sein.

Dem Kolben (50) der Gehäusezone (11) dient ein Gleitschiebekeil (71) als Kolbenstange. Der Kolben (50) der Gehäusezone (12) hat einen Wälzschiebekeil (101) als Kolbenstange. Jeder Schiebekeil (71, 101) ist mit dem entsprechenden Kolben (50) über eine Zylinderschraube (55) verbunden und an dem entsprechenden Zentrierzapfen (53) zentriert. Zur Fixierung am Kolben (50) hat jeder Schiebekeil (71, 101) eine zentrale Durchgangsbohrung (72, 102), die an ihrem - dem Kolben (50) zugewandten - Ende ein Innengewinde aufweist. In jeder dieser Bohrungen (72, 102) ist eine Rückhubfeder (58) eingelegt. Diese Rückhubfedern (58) stützen sich gehäuseseitig in den Zylindersenkungen (25) der Bodenfläche (14) ab, während sie kolbenseitig jeweils an der unteren Stirnfläche der Zylinderschraube (55) anliegen.

Der Gleitschiebekeil (71) der rechten Gehäusezone (11) hat z. B. einen kreuzförmigen Querschnitt, vgl. Figur 10. Der Querschnitt weist vier Stege (73 - 76) auf. Die einander gegenüberliegenden, z. B. parallel zur Mittenlängsebene (6) ausgerichteten Führungsstege (73, 74) dienen der Führung des Gleitschiebekeils (71) in der Keilgetriebeausnehmung (23). Beide Führungsstege (73, 74) haben identische Abmessungen. Sie kontaktieren die Keilgetriebeausnehmung (23) mit ihren teilzylindermantelflächigen Führungsflächen.

Die beiden anderen Stege sind die Stützstege (75, 76). Sie sind parallel zur Klemmrichtung (3) angeordnet. Sie weisen in Klemmrichtung (3) orientierte plane Stützflächen (77, 78) auf. Die rechte Stützfläche (77), vgl. Figur 6, liegt an einem, in der Gehemmebohrung (31) eingeschraubten Einschraubdeckel (83) großflächig an. Der Einschraubdeckel (83) ist eine zylindrische Scheibe, die an der äußeren Stirnfläche Bohrungen für den Eingriff eines Zapfenschlüssels aufweist. Er hat ein Außengewinde, das in einer Ringnut endet. In der Nut ist ein Quetschring als Schraubensicherung eingelassen.

Die vom Stützsteg (75) kontaktierte Stirnfläche des Einschraubdeckels (83) ist dabei normal zur Klemmrichtung (3) ausgerichtet. Die Stützfläche (78) des linken Stützsteges (76), die an einem in der Druckstückführungsbohrung (33) gelagerten Schrägdruckstück (81) anliegt, schließt mit der Mittenlängsebene (6) einen Winkel von z. B. 5 Winkelgraden ein, wobei sich der Querschnitt des Stützsteges (76) z. B. linear in Richtung Bodenfläche (14) verjüngt. Dieser Winkel gewährleistet eine Selbsthemmung zwischen dem Gleitschiebekeil (71) und dem Schrägdruckstück (81), sofern beide Bauteile aus einer Stahllegierung bestehen und sich trocken kontaktieren.

Das Schrägdruckstück (81) ist ein zylindrischer Kolben mit einer angeformten Kolbenstange. Die Kolbenstange ragt bei betätigtem Reibgehemme (121) aus der Austrittsbohrung (34) heraus. Am Übergang der Kolbenstange zum Kolben befindet sich eine umlaufende Stirnnut, in der ein elastischer Rückhubring (82) mit z. B. rechteckigem Einzelquerschnitt sitzt.

Die Kolbenstange des Schrägdruckstücks (81) bildet zugleich eine Reibbacke (122) des Reibgehemmes (121). Die außenseitige Stirnfläche des Schrägdruckstückes (81), die beim Klemmen die Führungsschiene (7) kontaktiert, weist ggf. einen Reibbelag auf. Als Reibbelag wird beispielsweise ein pulvermetallurgisch hergestellter Reibwerkstoff auf Bronzebasis verwendet.

Nach der Figur 10 liegen die Mittellinien (29) der Schiebekeile (71, 101) bzw. deren Antriebsteile auf der mittleren Höhe der Nebenflächen (8,9) der Führungsschiene (7), sodass beim Klemmen auf die Schiebekeile (71, 101) keine Drehmomente um die Mittellinien (29) entstehen.

In der linken Gehäusezone (12), vgl. Figuren 6 und 7, sitzt in der Keilgetriebeausnehmung (24) ein Käfig (104), der zwei Zylinderrollen (108) lagert. Beide Zylinderrollen (108) liegen an dem am Kolben (50) befestigten Wälzschiebekeil (101) an. Die außen liegende Zylinderrolle (108) stützt sich an einem Einschraubdeckel (113) ab, während die innen liegende Zylinderrolle (108) an einem Plandruckstück (111) anliegt.

Der Käfig (104) ist im Wesentlichen ein rohrförmiges Bauteil, dessen zentrale, rechteckige Ausnehmung (105) den Wälzschiebekeil (101) ohne Kontakt umgibt. Er ist über seine Außenkontur zumindest oben und unten mit Spiel in der Käfigsitzausnehmung (31) geführt. Quer zu dieser Ausnehmung (105) befindet sich ein ebenfalls rechteckiger Durchbruch (106). Letzterer dient der Aufnahme der Zylinderrollen (108).

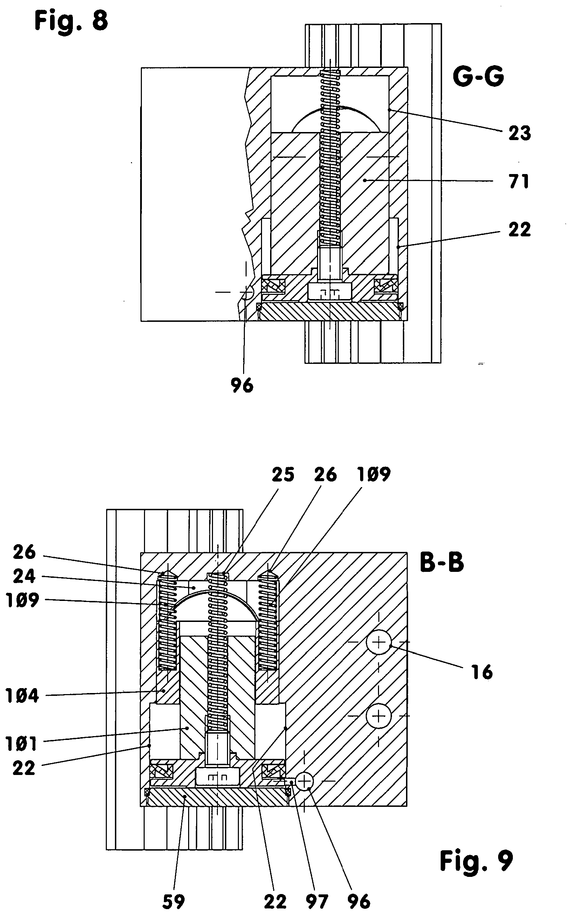

Der Käfig (104) hat in den Seitenwandungen, in denen auch die Zylinderrollen (108) gelagert sind, je eine z. B. unter 10 Winkelgraden nach außen abstehende Rastzunge (107). Die Rastzungen (107) ragen in Richtung Kolben (50). Nach Figur 6 stehen die Rastzungen (107) an den Hauptbohrungen (32) an. Bei unbetätigter Klemmung werden sie dort mit Hilfe zweier Käfigrückhubfedern (109) gehalten, vgl. Figur 9. Letztere sitzen im oberen und unteren Bereich des Käfigs (104) jeweils in einer Sacklochbohrung mit z. B. planem Boden.

Der Wälzschiebekeil (101) hat einen rechteckigen Querschnitt, der sich in Richtung Bodenfläche (14) einachsig und z. B. linear verjüngt. Seine, dem Plandruckstück (111) zugewandte Keilfläche (103) schließt mit der Mittenlängsebene (6) einen Winkel von z. B. einem Winkelgrad ein.

Das Plandruckstück (111) hat mit Ausnahme seiner planen, dem Wälzkörper (108) zugewandten Stirnfläche einen zum Schrägdruckstück (81) vergleichbaren Aufbau.

Bei dem im Gehäuse (10) einer Brems- und/oder Klemmvorrichtung eingebauten Zuschaltventil (150), vgl. Figuren 10 und 11, mündet in den Anschlussbereich (156) eine vertikale Bohrung (95), die unterhalb des Anschlussbereichs (156) in eine horizontale Bohrung (96) übergeht. Die horizontale Bohrung (96) schneidet eine sichelförmige Ausfräsung (97), vgl. Figur 10, die von der Zylinderflächenbohrung (22) der Gehäusezone (12) aus in das Gehäuse (10) eingearbeitet ist. Die Ausfräsung (97) durchdringt die Zylinderflächenbohrung (22) direkt hinter dem Gehäusedeckel (59), vgl. Figur 9. Die Bohrungen (95, 96), die an ihren freien Enden mittels verstemmter Kugeln (69) verschlossen sind, und die Ausfräsung (97) sind reale Bestandteile der symbolisierten zweiten Versorgungsleitung (94) aus Figur 2.

Das Gehäuse (10), nach den Figuren 10 und 11, weist im hinteren Bereich des Ventilgliedbereichs (154) eine horizontale Zulaufbohrung (65) auf, über die bei einer Ventilbetätigung Druckmittel dem Zuschaltventil (150) zuströmt.

Die Zulaufbohrung (65) wird von einer vertikalen Bohrung (66) geschnitten. Das untere Ende der Bohrung (66) ragt hinter dem Gehäusedeckel (59) der Gehäusezone (11) in die Zylinderflächenbohrung (22) hinein, vgl. Figur 10. Ihr oberes Ende ist mittels einer verstemmten Kugel (69) verschlossen. Auf der Höhe und in der Flucht der horizontalen Bohrung (96) befindet sich ein Gewindeanschluss (67), der in die Bohrung (66) mündet.

Zum Klemmen des Schlittens (1) an der Führungsschiene (7) bewegt sich mit dem Kolben (50) der Gleitschiebekeil (71) nach hinten. Hierbei drückt er das Schrägdruckstück (81) gegen die Führungsschiene (7). Sobald sich die Reibbacke (122) des Schrägdruckstückes (81) an der Nebenfläche (9) der Führungsschiene (7) angelegt hat, schiebt das Schrägdruckstück (81) das Gehäuse (10) gegenüber dem Vorrichtungsträger (40) - unter einem elastischen Komprimieren der linken Elastomerkörper (49) - nach rechts, bis sich die Reibbacke (132) der Gehäusezone (12) an der Nebenfläche (8) anlegt. Spätestens dann blockiert der Kolben (50) in der Zylinderflächenbohrung (22) der rechten Gehäusezone (11).

Nach den Figuren 10 und 11 strömt die Druckluft über den Ausgangsanschluss (156) in die Bohrungen (95, 96) und in die Ausfräsung (97) und gelangt somit vor den Pneumatikkolben (50) der Gehäusezone (12). Der Kolben (50) verschiebt den Wälzschiebekeil (101) gegen die Federkraft der Rückhubfeder (58) nach hinten. Der Wälzschiebekeil (101) klemmt das Plandruckstück (111) mit großer Klemmkraft gegen die Führungsschiene (7). Der Schlitten (1) ist somit am Maschinenbett (5) blockiert.

Zum Lösen der Klemmung wird das 3/2-Wegeventil (191) freigegeben. Beide Verdrängersysteme (61, 91) entlüften über dieses Ventil (191), vgl. Figur 2. Somit ist gewährleistet, dass sich die Reibbacken (122, 132) wieder von der Führungsschiene (7) lösen. Zugleich zentriert sich das Gehäuse (10) mittels der Elastomerringe (49) wieder am Vorrichtungsträger (40).

### Bezugszeichenliste:

- 1: Schlitten
- 2: Führungslängsrichtung, Schlittenbewegung
- 3: Klemmrichtung
- 5: Maschinenbett
- 6: vertikale Mittenlängsebene
- 7: Schiene, Führungsschiene
- 8, 9: Nebenflächen

- 10: Grundkörper, c- bzw. u-förmig
- 11: Gehäusezone, rechts
- 12: Gehäusezone, links
- 13: Flanschzone
- 14: Bodenfläche
- 15: Langloch
- 16: Querbohrungen
- 19: Nut, zentral

- 21: Sacklochbohrungen
- 22: Zylinderflächenbohrung
- 23: Keilgetriebeausnehmung, rechts
- 24: Keilgetriebeausnehmung, links
- 25: Zylindersenkungen, zentral
- 26: Zylindersenkungen, dezentral
- 27: Entlüftungsbohrung
- 28: Dichtringe
- 29: Mittellinie

- 31: Gehemmebohrungen
- 32: Hauptbohrungen
- 33: Druckstückführungsbohrungen, Führungen
- 34: Austrittsbohrungen
- 38: Durchdringungslinien
- 39: Mittellinien

- 40: Vorrichtungsträger
- 44: Gewindebohrungen
- 45: Gleitbohrungen
- 46: Gleitstifte
- 49: Elastomerkörper, ringförmig

- 50: Pneumatikkolben, Kolben
- 51: Bohrung, zentral
- 52: Anschlagsteg
- 53: Zentrierzapfen
- 54: Dichtring
- 55: Zylinderschraube, Gewindestift
- 58: Rückhubfeder
- 59: Gehäusedeckel

- 60: Antrieb, erster, rechts
- 61: Verdrängersystem, erstes; Antriebsvorrichtung,
- 63: Zylinder, erster
- 64: Versorgungsleitung, erste
- 65: Querbohrung; Zulaufbohrung, horizontal
- 66: Bohrung, vertikal
- 67: Gewindeanschluss
- 69: Kugeln

- 70: Gleitschiebekeilgetriebe, Schiebekeilgetriebe
- 71: Gleitschiebekeil, Schiebekeil, Keil, Kolbenstange
- 72: Bohrung, Durchgangsbohrung
- 73, 74: Führungsstege
- 75, 76: Stützstege
- 77: Stützfläche, rechts
- 78: Stützfläche, links

- 81: Schrägdruckstück, Klemm- oder Greifelement
- 82: Rückhubring
- 83: Einschraubdeckel

- 90: Antrieb, zweiter, links
- 91: Verdrängersystem, zweites; Antriebsvorrichtung
- 93: Zylinder, zweiter
- 94: Versorgungsleitung, zweite
- 95: Bohrung, vertikal
- 96: Bohrung, horizontal
- 97: Ausfräsung

- 100: Wälzschiebekeilgetriebe, Schiebekeilgetriebe
- 101: Wälzschiebekeil, Schiebekeil, Keil, Kolbenstange
- 102: Bohrung, Durchgangsbohrung
- 103: Keilfläche
- 104: Käfig
- 105: Ausnehmung
- 106: Durchbruch
- 107: Rastzungen

- 108: Wälzkörper, Zylinderrollen
- 109: Käfigrückhubfedern
- 111: Plandruckstück, Klemm- oder Greifelement
- 112: Rückhubring
- 113: Einschraubdeckel

- 121: Reibgehemme, rechts
- 122: Reibbacke
- 131: Reibgehemme, links
- 132: Reibbacke

- 150: Zuschaltventil, Folgeventil
- 151: Gehäuse
- 152: Stufenbohrung
- 153: Deckelbereich
- 154: Ventilgliedbereich
- 155: Sitzbereich, kegelstumpfmantelförmig, Kegelsitz
- 156: Anschlussbereich
- 157: Ventildeckel
- 158: Kunststoffquetschring
- 159: Durchgangsbohrung

- 160: Druckminderventil, modifiziert
- 161: Hauptventilglied
- 162: Ventilkolben
- 163: Kolbenbereich
- 164: Ringnut
- 165: Dichtring
- 166: Schaftbereich
- 167: Fase
- 168: Ringnut von (167)
- 169: Dichtring von (167)

- 171: Rückströmabschnitt
- 172: Sitzabschnitt
- 173: Querbohrung, radial
- 174: Boden, plan
- 175: Gewindeabschnitt
- 176: Hauptventilraum
- 177: Stiftschraube
- 178: Zylinderstift
- 179: Hauptventilfeder, Rückhubfeder

- 180: Rückschlagventil
- 181: Rückschlagventilraum
- 182: Rückschlagventilglied, Elastomerkörper
- 183: Dichtlippe
- 184: Rückschlagventilfeder

- 190: Druckquelle
- 191: 3/2-Wegeventil
- 192: Verzweigungsstelle, erste
- 193: Eingangsanschluss
- 194: Ausgangsanschluss
- 195: Steueranschluss
- 196: Bypassleitung

## Patentansprüche

1. Vorrichtung mit einem ersten (60) und einem zweiten jeweils huberzeugenden Antrieb (90) mit jeweils mindestens einem pneumatischen oder hydraulischen Verdrängersystem (61, 91),
- wobei jedes Verdrängersystem (61, 91) auf ein Schiebekeilgetriebe (70, 100) wirkt,
- wobei das erste Verdrängersystem (61) auf ein Schiebekeilgetriebe (70) wirkt, dessen Keilwinkel mindestens doppelt so groß ist wie der Keilwinkel des Schiebekeilgetriebes (100), auf das das zweite Verdrängersystem (91) wirkt,
- wobei das Verdrängersystem (91) des zweiten Antriebs (90) unter Zwischenschalten eines Zuschaltventils (150) dem Verdrängersystem (61) des ersten Antriebs (60) nachgeschaltet ist,
- wobei im Zuschaltventil (150) die Versorgungsleitung (64) des ersten Verdrängersystems (61) in einen Hauptventilraum (176) mündet, in den auch die Versorgungsleitung (94) des zweiten Verdrängersystems (91) mündet,
- wobei bei stets offener erster Versorgungsleitung (64) die zweite (94) unterhalb eines vorgegebenen Druckschwellwerts - durch ein im Hauptventilraum (176) angeordnetes Hauptventilglied (161) - geschlossen ist und
- wobei sich im Hauptventilglied (161) ein Rückschlagventilraum (181) befindet, in dem ein federbelastetes Rückschlagventilglied (182) angeordnet ist, das bei einer entlasteten ersten Versorgungsleitung (64) die zweite Versorgungsleitung (94) mit der ersten (64) durch Öffenbarkeit verbindet.

2. Vorrichtung gemäß Anspruch 1, **dadurch gekennzeichnet, dass** das Schiebekeilgetriebe (70) des ersten Antriebs (60) mindestens zwei aneinander entlanggleitende Keile (71, 81) hat, während die Keile (101, 111) des Schiebekeilgetriebes (100) des zweiten Antriebs (90) durch mindestens einen Wälzkörper (108) beabstandet sind.

3. Vorrichtung gemäß Anspruch 1, **dadurch gekennzeichnet, dass** jedes Verdrängersystem (61, 91) mindestens aus einer Zylinder-Kolben-Einheit (50, 63; 50, 93), einem Membranzylinder oder einem Rollmembranzylinder besteht.

4. Vorrichtung gemäß Anspruch 1, **dadurch gekennzeichnet, dass** das im Rückschlagventilraum (181) des Hauptventilglieds (161) sitzende Rückschlagventilglied (182) in seiner Schließstellung mittels einer Rückschlagventilfeder (184) haltbar ist.

## Claims

1. Device with a first (60) and a second drive (90), each generating a stroke movement and each having at least one pneumatic or hydraulic displacement system (61, 91),
- wherein each displacement system (61, 91) acts on a sliding wedge-type gear (70, 100),
- wherein the first displacement system (61) acts on a sliding wedge-type gear (70), the wedge angle of which is at least twice as great as the wedge angle of the sliding wedge-type gear (100) on which the second displacement system (91) acts,
- wherein the displacement system (91) of the second drive (90) is connected downstream of the displacement system (61) of the first drive (60) via a connecting valve (150),
- wherein the supply line (64) of the first displacement system (61) opens into a main valve chamber (176) inside the connecting valve (150), into which main valve chamber (176) also opens the supply line (94) of the second displacement system (91),
- wherein, given that the first supply line (64) is always open, the second supply line (94) is closed below a predefined pressure threshold by means of a main valve element (161) arranged in the main valve chamber (176), and
- wherein a non-return valve chamber is located in the main valve element (161), in which non-return valve chamber (181) a spring-loaded non-return valve element (182) is arranged, which connects the second supply line (94) with the first (64) by opening when the first supply line (64) is relieved of pressure.

2. Device according to claim 1, **characterized in that** the sliding wedge-type gear (70) of the first drive (60) has at least two wedges (71, 81) sliding along each other, while the wedges (101, 111) of the sliding wedge-type gear (100) of the second drive (90) are spaced apart from one another by means of at least one rolling element (108).

3. Device according to claim 1, **characterized in that** each displacement system (61, 91) consists of at least one cylinder-piston unit (50, 63; 50, 93), a diaphragm cylinder or a rolling diaphragm cylinder.

4. Device according to claim 1, **characterized in that** the non-return valve element (182) located in the non-return valve chamber (181) of the main valve element (161) can be held in its closed position by means of a check valve spring (184) .

## Revendications

1. Dispositif doté d'un premier (60) et d'un deuxième entraînement (90), générant chacun une levée, doté d'au moins un système de refoulement (61, 91) pneumatique ou hydraulique,
- chaque système de refoulement (61, 91) agissant sur une transmission à clavettes coulissantes (70, 100),
- le premier système de refoulement (61) agissant sur une transmission à clavettes coulissantes (70) dont l'angle de clavette de la transmission à clavettes coulissantes (100) agit sur le deuxième système de refoulement (91),
- le système de refoulement (91) du deuxième entraînement (90) étant monté en aval du système de refoulement (61) du premier entraînement (60), sous interposition d'une valve de séquence (150)
- la conduite d'alimentation (64) du premier système de refoulement (61) débouchant dans la valve de séquence (150), dans un espace principal de valve (176) dans lequel débouche également la conduite d'alimentation (94) du deuxième système de refoulement (91),
- alors que la première conduite d'alimentation (64) est toujours ouverte, en-dessous d'une valeur seuil de pression prédéfinie la deuxième (94) étant fermée par un élément principal de valve (161) placé dans l'espace principal de valve (176) et
- dans l'élément principal de valve (161) se trouvant un espace de valve antiretour (181) dans lequel est placé un élément de valve antiretour (182) contraint par ressort, qui lorsque la première conduite d'alimentation (64) n'est pas contrainte, relie par possibilité d'ouverture la deuxième conduite d'alimentation (94) avec la première (64).

2. Dispositif selon la revendication 1, **caractérisé en ce que** la transmission à clavettes coulissantes (70) du premier entraînement (60) dispose d'au moins deux clavettes (71, 81) coulissant l'une le long de l'autre, alors que les clavettes (101, 111) de la transmission à clavettes coulissantes (100) du deuxième entraînement (90) sont écartées par au moins un élément à roulement (108).

3. Dispositif selon la revendication 1, **caractérisé en ce que** chaque système de refoulement (61, 91) consiste dans au moins une unité piston/cylindre (50, 63 ; 50, 93), un cylindre à diaphragme ou un cylindre à diaphragme roulant.

4. Dispositif selon la revendication 1, **caractérisé en ce que** l'élément de valve antiretour (182) reposant dans l'espace de valve antiretour (181) de l'élément principal de valve (161) est susceptible d'être maintenu dans sa position de fermeture à l'aide d'un ressort de valve antiretour (184).
